(19) Europäisches Patentamt
European Patent Office
Office européen des brevets

(11) Veröffentlichungsnummer: **0 124 087**
**B1**

(12) **EUROPÄISCHE PATENTSCHRIFT**

(45) Veröffentlichungstag der Patentschrift: **15.10.86**

(51) Int. Cl.⁴: **C 25 B 1/22**, D 01 F 2/08, D 01 F 13/02

(21) Anmeldenummer: **84104689.9**

(22) Anmeldetag: **26.04.84**

# (54) Verfahren zur Anreicherung von Schwefelsäure.

(30) Priorität: **29.04.83 DE 3315626**

(43) Veröffentlichungstag der Anmeldung: **07.11.84 Patentblatt 84/45**

(45) Bekanntmachung des Hinweises auf die Patenterteilung: **15.10.86 Patentblatt 86/42**

(84) Benannte Vertragsstaaten: **AT BE DE GB IT NL SE**

(56) Entgegenhaltungen:
**GB-A-2 065 702**

**SOVIET INVENTIONS ILLUSTRATED, Sektion CH, Woche D 46, 23. Dezember 1981, DERWENT PUBLICATIONS LTD., London J 03**
**PATENT ABSTRACTS OF JAPAN, unexamined applications, Sektion C, vol. 4, nr. 50, 16. April 1980, THE PATENT OFFICE JAPANESE GOVERNMENT, Seite 38 C 7**

(73) Patentinhaber: **HOECHST AKTIENGESELLSCHAFT, Postfach 80 03 20, D-6230 Frankfurt am Main 80 (DE)**

(72) Erfinder: **Kau, Heinz, Dr., Rossertstrasse 73, D-6239 Kriftel (DE)**
Erfinder: **Russow, Jürgen, Dr., Am Schieferberg 45, D-6233 Kelkheim (Taunus) (DE)**

**EP 0 124 087 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft ein elektrolytisches Verfahren zur Erhöhung der Schwefelsäure-Konzentration von Lösungen, die Alkalisulfat, Schwefelsäure und Erdalkalimetall-Ionen enthalten. Solche Lösungen fallen beispielsweise bei der Herstellung von Folien oder Fäden aus regenerierter Zellulose nach dem Xanthogenat-Prozeß an.

Beim Xanthogenat-Prozeß wird Zellulose mit Schwefelkohlenstoff in Natronlauge gelöst. Diese Lösung, Viskose genannt, wird über Düsen in das sogenannte Spinnbad gebracht, das neben einer bestimmten Menge an Schwefelsäure noch Natriumsulfat enthält. Die Zellulose wird durch dieses Bad als Hydratgel ausgefällt. Sie durchläuft anschließend noch verschiedene weitere Fäll- und Spülbäder, in denen sie sich mehr und mehr verfestigt und schließlich in das stabile formbeständige Endprodukt überführt wird. Im Spinnbad werden durch die mit der Viskose eingebrachte Natronlauge Teile der Schwefelsäure zu Natriumsulfat neutralisiert. In den nachgeschalteten Fällbädern, die Schwefelsäure enthalten, und in den Spülbädern werden noch anhaftende Säure und Salze von der Oberfläche der regenerierten Zellulose abgelöst, so daß diese Bäder ebenfalls Schwefelsäure und Natriumsulfat in unterschiedlichen Konzentrationen enthalten, die jedoch im Vergleich zum Spinnbad wesentlich niedriger liegen. Das Spinnbad wird häufig für einc Wiederverwendung aufgearbeitet. Dabei muß das überschüssige Natriumsulfat abgetrennt und die fehlende Schwefelsäure ergänzt werden. Dies geschieht üblicherweise durch Eindampfen, Ausfällen von Natriumsulfat und Zugabe frischer Säure. Der Gesamtprozeß verbraucht demnach Natronlauge und Schwefelsäure und führt zu einem Zwangsanfall an Natriumsulfat.

Wenn es gelänge, diese Bäder durch Elektrolyse aufzuarbeiten, daß heißt, das Natriumsulfat in Schwefelsäure und Natronlauge aufzuspalten, sollte die Herstellung von regenerierter Zellulose ohne Verbrauch von Säure und Lauge und ohne Zwangsanfall von schwer verwertbaren Nebenprodukten möglich sein.

In der Literatur werden verschiedene Verfahren zur elektrolytischen Aufspaltung von Alkalisulfaten in Schwefelsäure und Alkalihydroxid beschrieben, sowohl in Diaphragma- als auch in Quecksilber- und in Mebranzellen. Der Aufbau und die Wirkungsweise von Quecksilberzellen und von Zellen mit Diaphragma werden z.B. ausführlich beschrieben in "Encyclopedia of Electrochemistry", Reinhold Publishing Corp., New York (1964) auf den Seiten 175 ff und 1065 - 1068. Die Schwierigkeiten bei Zellen, die mit porösen Diaphragmen geteilt sind, besteht vor allem darin, daß der Anolyt nicht vollständig vom Katholyt getrennt werden kann. Deshalb ist es nicht wirtschaftlich möglich, Schwefelsäure enthaltende Alkalisulfatlösungen, wie sie bei der Herstellung regenerierter Zellulose anfallen, in einer Diaphragmazelle zu elektrolysieren. Die Verluste an Schwefelsäure durch Neutralisation mit der Katholytlauge wären dabei zu groß, so daß die erforderliche Aufkonzentrierung an Säure nicht oder nur mit sehr schlechten Ausbeuten erreicht werden kann.

Auch in Quecksilberzellen können keine Schwefelsäure enthaltenden Alkalisulfatlösungen aufgearbeitet werden, da das an der Quecksilberkathode gebildete Alkaliamalgam noch in der Zelle von der Säure angegriffen wird. Alkalihydroxid und Schwefelsäure werden daher ebenfalls nur in sehr schlechten Ausbeuten erhalten.

Für einen vollständigen Umsatz des eingesetzten Alkalisulfats und die Erzeugung einer möglichst salzfreien Schwefelsäure hoher Konzentration ist eine mittels Ionenaustauschermembran in Anoden- und Kathodenkammer geteilte Zelle nicht ausreichend. Für diesen Zweck wurden Elektrodialysezellen beschrieben (z.B. SU Pat. 701 963, SU Pat. 806 059, Japan Kokai 76 14884 und Japan Kokai 80 21519) die durch eine Kationen - und eine Anionenaustauschermembran bzw. durch zwei Kationenaustauschermembranen in 3 Kammern geteilt sind. Die Alkalisulfatlösung wird in die Mittelkammer zwischen Anoden- und Kathodenkammer eingespeist.

Die DE-OS 2 741 956 beschreibt ein Verfahren zur Elektrolyse von $Na_2SO_4$ in einer Zweikammer-Zelle, bei der Kathode und Anode auf der Oberfläche der Austauschermembran aufgebracht sind (sog. SPE = Solid Polymer-Electrolyt-Technologie). Dabei wird gegenüber der üblichen Anordnung mit von der Membran getrennten Elektroden eine niedrigere Zellenspannung und damit ein geringerer Energieverbrauch erzielt. Es wird nicht erwähnt, daß das Ausgangsprodukt durch Erdalkalien verunreinigt ist.

Bei der Aufarbeitung der schwefelsauren Natriumsulfatlösungen aus der Produktion regenerierter Zellulose ist eine vollständige Umsetzung des eingesetzten Natriumsulfats und die Gewinnung einer salzfreien Schwefelsäure nicht erforderlich.

Es ist lediglich eine Abreicherung der eingesetzten Lösungen an Natriumsulfat und eine entsprechende Erhöhung der Konzentration an Schwefelsäure erforderlich. Üblicherweise sind Lösungen mit einem Gewichtsverhältnis $Na_2SO_4/H_2SO_4$ von etwa 3: 1 auf ein Verhältnis von 2: 1 zu bringen. Es sind z.B. Lösungen mit etwa 50 g/l $H_2SO_4$ und 150 g/l $Na_2SO_4$ auf etwa 70 g/l $H_2SO_4$ anzureichern. Es können jedoch bei einzelnen Verfahren zur Herstellung regenerierter Zellulose in Abhängigkeit von den Eigenschaften des gewünschten Endproduktes auch Spinnbäder mit anderer Zusammensetzung vorliegen, was bei der Elektrolyse auch andere änderungen der Konzentration erforderlich macht.

Aus der europäischen Patentanmeldung 32 007

ist ein Verfahren zur Aufarbeitung von $H_2SO_4/Na_2SO_4$-Säurebädern bekannt, die bei der Herstellung von regenerierter Zellulose anfallen. Diese Bäder werden im Anodenraum einer Membranzelle elektrolysiert. In den Kathodenraum der Zelle wird das beim Auswaschen der regenerierten Zellulose anfallende Waschwasser eingeführt. Dieses Waschwasser enthält nur wenig Schwefelsäure und wird durch die bei der Elektrolyse im Katholyt gebildete Lauge neutralisiert. Man erhält daher als Ablauf aus dem Kathodenraum eine neutrale bis schwach saure Natriumsulfat-Lösung, die verworfen werden kann. In den eingesetzten Säurebädern bewirkt die Elektrolyse eine Zunahme der Schwefelsäure-Konzentration. Es wird keine freie Natronlauge gewonnen.

Eigene Versuche, nach diesem Verfahren Spinnbad-Lösungen aus der Produktion von regenerierter Zellulose unter gleichzeitiger Gewinnung von Natronlauge zu elektrolysieren (Vergleichsbeispiele 1 und 2), haben gezeigt, daß dabei eine kontinuierlicher Betrieb der Zelle nur über einen kurzen Zeitraum möglich ist. Es wurde zwar die Aufspaltung von Natriumsulfat in Schwefelsäure (im Anolyt) und Natronlauge (im Katholyt) erreicht; jedoch stieg die Zellenspannung dabei so rasch an, daß die Versuche schon nach wenigen Tagen abgebrochen werden mußten. Auf der Membran hatten sich sehr dichte Ablagerungen gebildet, in denen Kalzium und Magnesium nachgewiesen wurden.

Analysen der eingesetzten Spinnbäder ergaben Kalzium- und Magnesium-Gehalte von je 15 bis 25 mg/l. Die eingesetzte Zellulose enthält geringe Mengen an Kalzium und Magnesium, so daß sich die Bäder, sofern sie nach einer Aufarbeitung wieder neu eingesetzt werden immer stärker mit Erdalkalien anreichern würden. Der Gehalt an Kalzium-Ionen ist begrenzt durch das Löslichkeitsprodukt von Kalziumsulfat bei der vorgegebenen Badzusammensetzung. Magnesiumsulfat ist wesentlich leichter löslich, so daß die Magnesium-Gehalte im Prinzip noch viel höher ansteigen können.

Es bestand daher die Aufgabe, ein elektrolytisches Verfahren zur Zerlegung von Erdalkali enthaltenden Alkalisulfat/Schwefelsäure-Lösungen zu finden, bei dem diese Ablagerungen auf der Membran nicht auftreten.

Es wurde nun ein Verfahren zur Erhöhung der Schwefelsäure-Konzentration von Lösungen, die Alkalisulfat, Schwefelsäure und Erdalkalimetall-Ionen enthalten, durch Elektrolyse gefunden. Diese Elektrolyse wird durchgeführt in einer Zelle mit einem Anodenraum und einem Kathodenraum, die jeweils durch eine Kationenaustauscher-Membran begrenzt werden, wobei die aufzuarbeitenden Lösungen in den Anodenraum der Zelle eingeführt werden. Das Verfahren ist dadurch gekennzeichnet, daß zwischen Kathodenraum und Anodenraum 2 Kationenaustauscher-Membranen vorhanden sind, die eine Mittelkammer begrenzen, diese Mittelkammer mit einer wäßrigen Alkali-Ionen enthaltenden Lösung gefüllt ist und man während der Elektrolyse die Konzentration der Lösung in der Mittelkammer an Erdalkalimetall-Ionen unter 5 mg/l hält. Vorzugsweise soll diese Konzentration höchstens 1 mg/l betragen.

Die beim erfindungsgemäßen Verfahren eingesetzte Zelle wird durch die beiden Kationenaustauscher-Membranen in 3 Kammern geteilt. Sie enthält für jede dieser Kammern getrennte Zuleitungen und Ableitungen für Lösungen unterschiedlicher Zusammensetzung. Bei Betrieb sind die Elektroden mit einer Gleichstromquelle verbunden.

Beim erfindungsgemäßen Verfahren wird als Alkalisulfat vorzugsweise Natriumsulfat eingesetzt. An Erdalkalimetall-Ionen sind insbesonder Kalzium- und/oder Magnesium-Ionen vorhanden. Insbesondere können bei diesem Verfahren die Lösungen eingesetzt werden, die bei der Herstellung regenerierter Zellulose als Spinn-, Fäll- und Spülbäder anfallen und die Natriumsulfat und Schwefelsäure in unterschiedlichen Konzentrationen enthalten. Man erreicht bei der Elektrolyse neben der Erhöhung der Schwefelsäure-Konzentration eine entsprechende Abnahme der $Na_2SO_4$-Konzentration. Die Lösungen können nach der Elektrolyse entweder direkt oder nach einer zusätzlichen Abtrennung des überschüssigen Wassers mittels Eindampfen wieder als Spinn- oder Fällbad zurückgeführt werden. Der Zwangsanfall an Natriumsulfat, bzw. von Abfall-Lösungen, die Natriumsulfat und Schwefelsäure enthalten, wird bei diesem Verfahren vermieden. Die gleichzeitig im Katholyt der Zelle gebildete Natonlauge kann als solche isoliert und zur Herstellung der Viskose eingesetzt werden. Wenn man nicht Wasser, sondern Säure enthaltende Lösungen in den Kathodenraum einspeist, so fällt nicht Alkalilauge, sondern eine Alkalisalze enthaltende Lösung als Katholyt an. Bevorzugt ist es jedoch, die Elektrolyse so zu führen, daß Alkalilauge gewonnen wird.

Die bei der Elektrolyse entstehenden Gase, Wasserstoff und Sauerstoff, können ebenfalls in sinnvoller Weise verwendet werden. Der Wasserstoff kann z.B. als Brennstoff teilweise die Energie liefern, die zum Abdampfen des überschüssigen Wassers erforderlich ist. Der Sauerstoff kann zur Oxidation $H_2S$ enthaltender Abgase an einem Katalysator verwendet werden.

Bei der Elektrolyse der schwefelsauren Lösung entstehen im Anodenraum gemäß der folgenden Gleichung (1)

(1) $H_2O \rightarrow 2\,H^+ + 1/2\,O_2\uparrow + 2e^-$

$H^+$-Ionen und Sauerstoff, der zusammen mit der Anolytlösung drucklos aus der Zelle abgeführt werden kann. Im Kathodenraum wird bevorzugt Wasser oder verdünnte Alkalihydroxidlösung eingesetzt. Bei der Elektrolyse entstehen hier, gemäß der Gleichung (2)

(2) $2\,H_2O + 2e^- \rightarrow 2\,OH^- + H_2\uparrow$

Hydroxyl-Ionen und Wasserstoff, der ebenfalls drucklos zusammen mit der Kathoytlauge aus der Zelle abgeführt werden kann.

In die Mittelkammer der Zelle, die sich zwischen der Anodenund der Kathodenkammer befindet, wird bei erstmaliger Füllung vorzugsweise eine neutrale bis schwach alkalische Alkalisulfat-Lösung eingeführt. Diese Lösung kann auch noch andere Anionen enthalten, wie z.B. Carbonat, Chlorid oder Phosphat, ohne daß dadurch der Ablauf der Elektrolyse schädlich beeinflußt wird. Bevorzugt ist jedoch einc Lösung, die nur Alkalisulfat enthält. Die Konzentration kann bis zur Sättigungsgrenze ansteigen. Aus Gründen der besseren Leitfähigkeit sind Lösungen bevorzugt, deren Alkalisulfat-Konzentration das 0,5 bis 2-fache der Alkalisulfat-Konzentration des Anolyten entsprechen. Die eingesetzte Lösung soll jedoch frei sein von Erdalkali-Ionen. Wenn der Erdalkali-Gehalt der Lösung der Mittelkammer den vorgegebenen Grenzwert zu erreichen droht, ist die Lösung auszuwechseln.

Sie kann kontinuierlich abgezogen, gereinigt und im Kreislauf zurückgeführt werden. Damit wird die Mittelkammer von einer Lösung durchströmt, die Alkalisulfat enthält. Vor dem Wiedereintritt in die Zelle wird diese Lösung ganz oder zumindest teilweise gereinigt. Hierfür muß zunächst die entstandene Säure durch Alkalicarbonat oder Alkalihydroxid neutralisiert werden, d.h. ein pH-Wert von mindestens 7 eingestellt werden. Dazu kann auch Katholyt-Lauge verwendet werden. Zur eigentlichen Reinigung (Entfernung von Erdalkali-Ionen) können die gleichen Verfahren, wie zur Vorbehandlung der Sole bei der Natriumchlorid-Elektrolyse angewendet werden, z.B. die Fällung von Erdalkalicarbonaten oder Erdalkaliphosphaten nach Zugabe von Carbonat oder Phosphat und anschließende Abtrennung durch Filtration. Möglich ist ferner die Behandlung der Lösung mit einem Ionenaustauscherharz. Sie kann entweder diskontinuierlich durch Zugabe einer bestimmten Menge an Austauscherharz und Filtration nach einer genügend langen Verweilzeit oder kontinuierlich erfolgen, indem die Lösung über eine mit Austauscherharz gefüllte Säule geschickt wird. Um einen möglichst hohen Reinheitsgrad zu erzielen, wird man zweckmäßigerweise nach Fällung und Fitration eine Behandlung mit Ionenaustauscher anschließen. Dabei lassen sich die Kalzium- und Magnesium-Gehalte jeweils auf unter 0,1 mg/l entfernen. Die so gereinigte Lösung kann dann wieder direkt in den Mittelkammer-Kreislauf zurückgeführt werden.

Bei der Elektrolyse werden Kationen durch die erste Membran vom Anodenraum in die Mittelkammer und gleichzeitig die äquivalente Menge an Kationen aus der Mittelkammer durch die zweite Membran in die Kathodenkammer geführt. Die Konzentration an Säure in der Mittelkammer soll stets niedriger sein als im Anodenraum. Je höher die Säurekonzentration, umso niedriger ist die Laugestromausbeute und umso hoher der Aufwand für eine Reinigung der mit Erdalkali beladenen Mittelkammer-Lösung. Vorzugsweise liegt die Säurekonzentration der eingesetzten Mittelkammerlösung höchstens bei 10 % der der eingesetzten Anolytlösung. Daher werden der Mittelkammer während der Elektrolyse mehr $H^+$-Ionen vom Anodenraum zugeführt als aus ihr über die zweite Membran in den Kathodenraum abwandern. Dies führt zu einem Anstieg der Säurekonzentration in der Mittelkammer. Die absolute Menge der in der Mittelkammer entstehenden Säure pro Zeiteinheit ist abhängig von Alkalisulfat/Säure-Verhältnis im Anolyt und in der Mittelkammer sowie von der Stromstärke.

Die Erdalkalimetall-Ionen werden bei der Elektrolyse ebenfalls entsprechend ihrer im Anolyt vorliegenden Konzentration durch die Membran teilweise in die Mittelkammer überführt. Wenn man die Mittelkammer kontinuierlich von einer wäßrigen Lösung durchströmen läßt, die reines Alkalisulfat enthält, so ist die Durchflußgeschwindigkeit so hoch zu wählen, daß hier die Konzentration an Erdalkalimetallionen nicht wesentlich ansteigt. So können diese Ionen von der alkalischen Katholyt-Seite der zweiten Membran fern gehalten und die den Elektrolyseablauf störenden Ausfällungen dort verhindert werden. Bei einer Konzentration von jeweils 10 bis 20 mg/l Kalzium und Magnesium im Anolyt wurden Transportgeschwindigkeiten für beide Ionenarten von etwa 0,05 bis 0,1 mg/Ah durch die Membran zur Mittelkammer gemessen. In diesem Falle wäre z.B. eine Durchflußgeschwindigkeit von 100 ml/Ah der Alkalisulfat-Lösung durch die Mittelkammer ausreichend, um hier die Konzentration an Kalzium- und an Magnesium-Ionen jeweils bei 0.5 - 1 mg/l zu halten.

Im folgenden wird die Anwendung des erfindungsgemäßen Elektrolyseverfahrens auf die kontinuierliche Aufarbeitung der Lösungen beschrieben, die bei der Herstellung von Folien oder Fäden aus regenerierter Zellulose anfallen (vgl. auch Beispiele 3 und 4). Die beim Spinnprozeß anfallenden Lösungen (Ablauf der Spinn-, Fäll- und Spülbäder) werden vereinigt und zur Abtrennung der Schwebstoffe, vor allem unlösliche Abbauprodukte der Zellulose sowie Schwefelverbindungen, filtriert. Es hat sich als zweckmäßig erwiesen, dazu die Lösungen über eine Schüttung von gekörnter Aktivkohle zu schicken. Mit diesem Adsorptionsmittel werden auch weitgehend die in der Lösung noch gelösten Anteile an Schwefelkohlenstoff und Schwefelwasserstoff entfernt. Der in der Aktivkohle zurückgehaltene Feststoff kann sehr leicht durch Rückspülung mit Wasser wieder entfernt und die Kohleschicht so regeneriert werden. Bevorzugt werden Lösungen eingesetzt, die frei sind von Zinksalzen.

Die vorgereinigte Lösung, die vor allem Natriumsulfat und Schwefelsäure, aber auch

Kalzium- und Magnesiumionen, lösliche Abbauprodukte der Zellulose und lösliche Schwefelverbindungen enthält, wird ohne weitere Vorbehandlung in den Anodenraum der Zelle gepumpt. Bei der Elektrolyse wird die Schwefelsäure-Konzentration erhöht. Bei kontinuierlicher Arbeitsweise muß die Durchlaufgeschwindigkeit durch den Anodenraum so gewählt werden, daß die gewünschte Endkonzentration an Säure bei vorgegebenem Elektrolysestrom erreicht wird. Die auf die umgesetzte Strommenge bezogene Ausbeute an neu gebildeter Säure ist abhängig von dem Natriumsulfat/Schwefelsäure-Verhältnis im Anolyt. Diese Ausbeute liegt um so höher, je größer der Überschuß an Natriumsulfat gegenüber der freien Säure ist. Deshalb werden vorzugsweise Lösungen eingesetzt, deren Natriumsulfat-Gehalt (in g/l) mindestens dem 1,5-fachen des Schwefelsäuregehaltes entsprechen. Üblicherweise enthalten diese Lösungen 30 bis 150 g/l $H_2SO_4$ und 100 bis 250 g/l $Na_2SO_4$.

Ein Teil der in den Lösungen enthaltenen Kalzium- und Magnesiumionen wandert in die Mittelkammer ab und wird so aus den Bädern ausgeschleust. Die eingesetzten Spinn-, Fäll- und Spülbäder enthalten üblicherweise etwa 10 bis 40 mg/l Kalzium und etwa 15 bis 45 mg/l Magnesium.

Bei der Elektrolyse wird auch Wasser aus dem Anolyt entfernt, weil ein Teil elektrolytisch zersetzt wird und die Kationen, die durch die Membran zur Mittelkammer abwandern, Wasser als Hydrathülle mit sich führen. Diese Mengen reichen in den meisten Fällen jedoch nicht aus, um das mit den Spülbädern eingeschleppte Wasser zu entfernen und die Konzentration des Spinnbades wieder zu erreichen. Deshalb wird meist der Elektrolyse noch eine Eindampfung nachgeschaltet werden, bevor die Lösungen wieder als Spinnbad zu verwenden sind. Typische Konzentrationen nach der Elektrolyse sind 50 bis 180 g/l $H_2SO_4$ und 100 bis 250 g/l $Na_2SO_4$.

Es ist bevorzugt, wegen der besseren Leitfähigkeit bereits zu Beginn der Elektrolyse im Kathodenraum eine gewisse Menge Natriumhydroxid von beispielsweise mindestens 1 Gew.-% NaOH, noch besser mindestens 5 Gew.-% NaOH, einzubringen. Die Maximalkonzentration des Katholyts an Natriumhydroxid hängt von der Selektivität der Membran ab. So treten bei den meisten Membranen mit zunehmender Natriumhydroxid-Konzentration im Katholyt zunehmend mehr Hydroxyl-Ionen durch die Membran, wodurch die Ausbeute an Lauge und die Energieausbeute verschlechtert werden. Aus dem Kathodenraum wird kontinuierlich oder chargenweise Katholyt (NaOH-Lösung) abgezogen. Im gleichen Maß wird Wasser nachgefüllt, so daß die Konzentration an NaOH etwa konstant bleibt. Optimale Werte der Stromausbeute werden, je nach Art der eingesetzten Membran, bei Werten zwischen 8 und 40 Gew.-% NaOH erhalten.

Als Material für die Kationenaustauschermembranen lassen sich Polymere, die möglichst weitgehend inert sind und die saure Gruppen tragen, verwenden, insbesondere perfluorierte Polymere, die Sulfonsäure- und/oder Carbonsäuregruppe tragen. Dabei sind Membranen mit nur Sulfonsäuregruppen bevorzugt, da Membranen mit Carbonsäuregruppen wegen der geringeren Dissoziation der Carbonsäure in saurer Lösung einen zu hohen Widerstand besitzen, was zu einer erhöhten Zellenspannung und damit zu einem erhöhten Energieverbrauch führt. Solche Kationenaustauschermembranen sind kommerziell, z.B. unter den Warenzeichen (R)Nafion oder (R)Flemion erhältlich. Es sind verschiedene Typen, z.B. einfache Folien oder Verbundsysteme mit eingelagertem Stützgewebe verfügbar. Diese Entwicklungen sind dem Fachmann von der Natriumchlorid-Membranelektrolyse her geläufig. Das gleiche gilt auch für Material und Gestalt der Elektroden.

Für die Kathoden wird im allgemeinen Eisen oder Stahl verwendet. Jedoch können auch andere Metalle und Legierungen oder leitfähige Verbindungen eingesetzt werden, die in alkalischer Lösung beständig sind und die sich insbesondere durch eine niedrige Überspannung für die Wasserstoffabscheidung auszeichnen, z.B. Nickel und Kobalt oder Edelmetalle, wie Platin oder Ruthenium, sowie Eisen oder Stahl, der mit diesen Metallen in geeigneter Form beschichtet ist.

Für die Anoden können alle Stoffe verwendet werden, die für die anodische Abscheidung von Sauerstoff in saurer Lösung geeignet sind, wie z.B. mit Bleidioxid beschichtetes Blei oder Edelmetalle und Edelmetall-Legierungen, wie z.B. Platin oder Platin/Iridium. Bevorzugt werden jedoch Anoden aus Titan, die mit Edelmetallen oder mit Edelmetalloxiden aktiviert bzw. mit Bleidioxid oder mit Mangandioxid beschichtet wurden. Die gewählten Elektrodenmaterialien sind für das erfindungsgemäße Verfahren nicht kritisch.

Die bei der Elektrolyse an die Zelle angelegte Stromstärke wird üblicherweise so gewählt, daß, bezogen auf die Fläche der Elektroden, eine Stromdichte von 0,5 bis 3,5 $kA/m^2$ erreicht wird. Es muß dabei ein wirtschaftlich sinvoller Kompromiß gefunden werden zwischen dem mit steigender Stromdichte steigenden Energieverbrauch als Folge der erhöhten Zellenspannung und den mit sinkender Stromdichte steigenden Investitionskosten als Folge der größeren Elektrodenfläche bzw. der größeren Zellenzahl, die für den Umsatz einer vorgegebenen Menge an Lösung dann notwendig wird. Außerdem wird mit steigender Stromdichte imallgemeinen die Haltbarkeit der Elektroden, insbesondere der Anoden, herabgesetzt.

Bevorzugt ist eine Elektrolyse bei Normaldruck und bei Temperaturen zwischen 20 und 100°C. Höhere oder tiefere Temperaturen sind zwar möglich, aber technisch bzw. energetisch

ungünstiger. Auch kann die Haltbarkeit der Elektroden durch Herabsetzung der Temperatur in der Zelle verbessert werden. Andererseits sind möglichst hohe Temperaturen wegen der besseren Leitfähigkeit und dem damit geringeren Energieverbrauch erwünscht.

Im allgemeinen wird sich unter diesen Bedingungen bei der Elektrolyse eine Zellenspannung im Bereich von 3 bis 5 Volt einstellen.

Das Zellengehäuse kann aus jedem elektrisch isolierenden Material hergestellt werden, das gegenüber Säure bzw. Lauge beständig ist, beispielsweise aus Polyethylen, Polypropylen, Polyvinylfluorid oder Polyester.

Das erfindungsgemäße Elektrolyseverfahren kann in sehr vorteilhafter Weise bei der Aufarbeitung von Lösungen angewendet werden, die bei der Herstellung von Folien oder von Fäden aus regenerierter Zellulose anfallen und die Schwefelsäure und Natriumsulfat enthalten. Durch den Einsatz unterschiedlicher Lösungen in drei Kammern der Elektrolysezelle wird erreicht, daß

1. im Anodenraum der Zelle die Relation $H_2SO_4/Na_2SO_4$ in den aufzuarbeitenden Lösungen so weit erhöht wird, daß die Lösungen wieder zur Herstellung regenerierter Zellulose verwendbar sind,

2. ein Teil der in diesen Lösungen enthaltenen Erdalkalimetall-Ionen über die Lösung in der Mittelkammer abgetrennt wird und

3. gleichzeitig im Kathodenraum der Zelle Natriumhydroxid entsteht, ohne daß der Ablauf der Elektrolyse durch Ausfällungen von Erdalkalimetallhydroxiden auf und in den Membranen gestört wird.

Durch die Elektrolyse werden die Stoffe (Schwefelsäure und Natronlauge) zurückgebildet, die bei der Herstellung regenerierter Zellulose verbraucht werden, ohne daß dabei zusätzlich Abfallstoffe, giftige Gase oder schädliche Abwässer entstehen. Es ergibt sich ein geschlossenes System, das frei ist von jeglicher Umweltbelästigung und in dieser Hinsicht einen beträchtlichen Fortschritt darstellt.

Nachfolgend wird die Erfindung durch Beispiele näher erläutert:

**Vergleichsbeispiel 1**

Die Elektrolysezelle war durch eine (R)Nafion 415-Membran (Hersteller: DuPont) in einen Anoden- und einen Kathodenraum von je 70 ml Volumen geteilt. Die Kathode bestand aus Streckmetall (Normalstahl ST 37) mit einer geometrischen Fläche von 40 $cm^2$, die Anode aus Titanstreckmetall mit gleich großer Fläche und einer Aktivierung, die aus einem Gemisch von 60 Gew.-% $TiO_2$, 20 Gew.-% $RuO_2$ und 20 Gew.-% $IrO_2$ bestand. Der Elektrodenabstand betrug ca. 4 mm. Die freie Fläche der Membran entsprach der geometrischen Fläche der Elektroden. Die Elektroden waren über Anschlußstäbe und Leitungsdrähte an ein Gleichstromspeisegerät angeschlossen.

In den Stromkreis waren Meßgeräte zur Messung der Stromstärke und der Strommenge geschaltet. Zwischen die Anschlußstäbe der Elektroden war ein Voltmeter zur Messung der Zellenspannung geschaltet. Beide Zellräume konnten getrennt mit ummantelten Heizdrähten beheizt und die Temperatur über Kontaktthermometer geregelt werden. Beide Zellräume hatten getrennte Zu- und Abläufe. Über Schlauchverbindungen und Pumpen wurden Katholyt- und Anolyt-Lösung von unten mit konstanter Geschwindigkeit in die Zelle eingeleitet und über einen Überlauf drucklos zusammen mit den an den Elektroden enstehenden Gasen wieder abgeführt.

In den Kathodenraum der Zelle wurde Natronlauge mit 90 g/l NaOH eingefüllt und in den Anodenraum eine schwefelsaure Natriumsulfatlösung, die als Spinnbad bei der Herstellung von Folien aus regenerierter Cellulose eingesetzt war und im folgenden als Sulfatlösung bezeichnet wird. Die Sulfat-Lösung war verunreinigt durch lösliche und unlösliche Abbauprodukte der Cellulose, durch lösliche und unlösliche Schwefelverbindungen, sowie durch Calcium- und Magnesiumionen. Die Art und die Menge der Celluloseanteile und der Schwefelverbindungen waren nicht genau bekannt. Zur Abtrennung der unlöslichen Schwebstoffe wurde die Lösung vor der Elektrolyse über eine Säule von 1000 mm Länge und 50 mm Durchmesser mit einer Füllung aus gekörnter Aktivkohle (Körnung 2,5 mm, Füllhöhe ca. 800 mm, Füllmenge ca. 500 g) geschickt. Nach der Filtration über Aktivkohle hatte dicse Lösung folgende Zusammensetzung: 50,1 g/l $H_2SO_4$ und 138,5 g/l $Na_2SO_4$, sowie 9,1 mg/l $Ca^{++}$ und 3,3 mg/l $Mg^{++}$.

Die Zelle wurde mit einer Stromstärke von 4 A belastet. Dies entspricht einer Stromdichte von 1 $kA/m^2$, bezogen auf die geometrische Fläche der Elektroden. Nachdem in beiden Zellräumen eine Temperatur von 50° C erreicht war, wurde eine Zellenspannung von 3,25 Volt gemessen. In den Kathodenraum wurde kontinuierlich Wasser mit einer Geschwindigkeit von 36,5 ml/h gepumpt und die über den Katholyt-Überlauf abfließende Lauge zur Ausbeutebestimmung gesammelt. In den Anodenraum wurde mit einer Geschwindigkeit von 335,6 ml/h die über Aktivkohle filtrierte Sulfatlösung gepumpt und die über den Anolyt-Ablauf abfließende Lösung ebenfalls zur Ausbeutebestimmung gesammelt.

Nach einer Laufzeit von rund 457 h und einem Stromverbrauch von 1827,3 Ah waren insgesamt 16,67 1 $H_2O$ in den Kathodenraum und 153,3 1 Sulfatlösung in den Anodenraum eingespeist. Aus der Zelle wurden abgeführt: 20,13 1 Katholyt mit einem Gehalt von 73,2 g/l NaOH sowie 147,89 1 Anolyt mit einem Gehalt von 63,95 g/l $H_2SO_4$ und 126 g/l $Na_2SO_4$ sowie Erdalkalien.

Hieraus errechnet sich eine Mengenausbeute

von 1473,5 g NaOH und 1777,7 g $H_2SO_4$, sowie, bezogen auf die umgesetzte Strommenge von 1827,3 Ah, eine Stromausbeute von 54,0 % für NaOH und von 53,2 % für $H_2SO_4$.

Die Zellenspannung war - bei konstant gehaltener Stromstärke - kontinuierlich von 3,25 Volt zu Beginn der Elektrolyse bis auf 4,9 Volt am Ende angestiegen. Der Versuch mußte wegen der weiter ansteigenden Zellenspannung abgebrochen werden. Auf der Membran hatte sich auf der dem Kathodenraum zugekehrten Seite, ein sehr dicker Belag abgeschieden, der mit Säure abgelöst werden konnte. Es wurden Ca und Mg nachgewiesen.

**Vergleichsbeispiel 2**

Die Elektrolyse wurde in der gleichen Zelle und mit den gleichen Bedingungen wie in Beispiel 1 fortgesetzt, nachdem die Nafion 415-Membran durch eine Nafion 324-Membran ersetzt worden war. Die Zelle wurde mit 4 A belastet. Bei einer Temperatur von 50° C in beiden Zellräumen wurde eine Zellenspannung von 3,3 Volt gemessen. In den Kathodenraum wurde Wasser mit einer Geschwindigkeit von 28,1 ml/h gepumpt. In den Anodenraum wurde Sulfatlösung, die als Spinnbad bei der Herstellung von Folien aus regenerierter Zellulose eingesetzt war und die, wie in Beispiel 1 beschrieben, über Aktivkohle filtriert war, mit einer Geschwindigkeit von 316,3 ml/h gepumpt. Diese Sulfatlösung hatte folgende Zusammensetzung: 49,3 g/l $H_2SO_4$ und 154 g/l $Na_2SO_4$ sowie 14,9 mg/l $Ca^{++}$ und 12,5 mg/l $Mg^{++}$.

Nach einer Laufzeit von rund 656 h und einem Stromverbrauch von 2622,5 Ah waren insgesamt 18,41 l Wasser in den Kathodenraum und 207,38 1 Sulfatlösung in den Anodenraum eingespeist. Aus der Zelle wurden abgeführt: 23,245 1 Katholyt mit einem Gehalt von 108,5 g/l NaOH sowie 199,54 1 Anoly mit einem Gehalt von 67,1 g/l $H_2SO_4$ und 138 g/l $Na_2SO_4$. Hieraus errechnet sich eine Mengenausbeute von 2522 g NaOH und 3165 g $H_2SO_4$, sowie, bezogen auf die umgesetzte Strommenge von 2622,5 Ah, eine Stromausbeute von 64,5 % für NaOH und 65,9 % für $H_2SO_4$.

Die Zellenspannung war kontinuierlich von 3,3 Volt zu Beginn der Elektrolyse bis auf 5,5 Volt am Ende angestiegen. Der Versuch mußte wegen der weiter ansteigenden Zellenspannung abgebrochen werden. Auf der Membran hatte sich auf der Seite, die dem Kathodenraum zugekehrt war, ein sehr dicker Belag abgeschieden. Es wurden Ca und Mg nachgewiesen.

**Beispiel 3**

Der Aufbau der Elektrolysezelle wurde gegenüber den Beispielen 1 und 2 wie folgt abgeändert. Durch den Einbau einer zweiten Kationenaustauschermembran wurde zusätzlich zwischen Anoden- und Kathodenraum eine dritte Kammer (Mittelkammer) geschaffen. Der Abstand der Elektroden wurde dadurch auf ca. 7 mm erhöht. Die Mittelkammer hatte ein Volumen von ca. 50 ml. Sie war ebenfalls mit einem Zulauf und einem Ablauf versehen, so daß auch durch diese Kammer während der Elektrolyse separat Lösung gepumpt werden konnte. Die Mittelkammer war vom Anodenraum durch eine Nafion 415-Membran und vom Kathodenraum durch eine (R)Nafion 324-Membran abgetrennt. Es wurden die gleichen Elektroden wie in den Beispielen 1 und 2 eingesetzt.

Der Kathodenraum der Zelle wurde mit Natriumhydroxidlösung mit 87,1 g/l NaOH gefüllt. In die Mittelkammer wurden eine neutrale Natriumsulfatlösung (technisches Natriumsulfat mit geringem Erdalkalianteil) mit 150 g/l $Na_2SO_4$ und in den Anodenraum Sulfatlösung, die als Spinnbad bei der Herstellung von Folien aus regenerierter Cellulose eingesetzt war, eingefüllt. Die Natriumsulfatlösung für die Mittelkammer war vorher über eine Säule (Länge = 1000 mm, Durchmesser = 50 mm) gelaufen, die bis zu einer Füllhöhe von 800 mm mit cinem organischen Kationenaustauscherharz mit Sulfonsäure-Endgruppen ((R)Lewatit TP 207, $Na^+$-Form) gefüllt war. Dabei wurde der Ca- und der Mg-Gehalt dieser Lösung auf Werte $\leqq$ 0,1 mg/l gebracht. Die Sulfatlösung für die Anodenkammer war, wie in Beispiel 1 beschrieben, über Aktivkohle filtriert. Die Analyse erhab die folgende Zusammensetzung: 49,5 g/l $H_2SO_4$ und 147,5 g/l $Na_2SO_4$, sowie 15 mg/l $Ca^{++}$ und 17 mg/l $Mg^{++}$.

Nach dem Auffüllen der Zellräume wurden die Elektroden an das Gleichstromspeisegerät angeschlossen und die Zelle mit 4 A belastet. Gleichzeitig wurden in den Kathodenraum Natriumhydroxidlösung (87,1 g/l NaOH) mit einer Geschwindigkeit von 31,6 ml/h, in den Anodenraum die über Aktivkohle filtrierte Sulfatlösung mit einer Geschwindigkeit von 282,4 ml/h und in die Mittelkammer die über Ionenaustauscher gereinigte Natriumsulfatlösung mit einer Geschwindigkeit von 74,0 ml/ h gepumpt. Die über die Überläufe der drei Zellräume ablaufenden Lösungen wurden getrennt gesammelt und analysiert.

Nach einer Laufzeit von rund 1109 h und einem Stromverbrauch von 4436,7 Ah waren insgesamt 35,07 1 Natriumhydroxidlösung in den Kathodenraum, 313,22 1 Sulfatlösung in den Anodenraum und 82,03 1 Natriumsulfat-Lösung in die Mittelkammer eingespeist. Aus der Zelle wurden abgeführt: 46,535 1 Katholyt mit 168,8 g/l NaOH, 299,05 1 Anolyt mit 67,0 g/l $H_2SO_4$ und 133,5 g/l $Na_2SO_4$ sowie 79,515 1 Natriumsulfatlösung aus der Mittelkammer mit 17,15 g/l $H_2SO_4$.

Hieraus errechtnet sich eine Mengenausbeute von 4800,5 g NaOH im Katholyt und von 4532 g $H_2SO_4$ im Anolyt sowie, bezogen auf die umgesetzte Strommenge von 4436,7 Ah, eine

Stromausbeute von 72,5 % für NaOH und von 55,8 % für $H_2SO_4$.

Die Zellenspannung lag während der gesamten Laufzeit zwischem 4,1 und 4,2 Volt bei einer Temperatur von 55° C im Katholyt und von 50° C im Anolyt. Ein Anstieg der Zellenspannung wie im den Vergleichsbeispielen 1 und 2 war nicht festzustellen.

In der Mittelkammer waren insgesamt 1357,4 g $H_2SO_4$ entstanden. Dies entspricht einer Stromausbeute von 16,7 %. Damit lag die Gesamtausbeute an Schwefelsäure (Anolyt + Mittelkammer) bei 72,5 %. Dieser Wert entspricht der gefundenen Natriumhydroxid-Stromausbeute im Katholyt von ebenfalls 72,5 %.

In der aus der Mittelkammer abfließenden Lösung wurden nach verschiedenen Zeitabständen Ca- und Mg-Bestimmungen durchgeführt. Die Werte lagen über dcn gesamten Zeitraum im Bereich von 1 mg/l bis höchstens 4 mg/l. Aus den Einzelwerten wurde, im Mittel eine Überführung von 0.081 mg Ca und von 0,081 mg Mg pro Ah aus dem Anolyt in die Mittelkammer berechnet.

**Beispiel 4**

In der im Beispiel 4 beschriebenen Zelle wurde die Elektrolyse mit den gleichen Membranen und den gleichen Elektroden mit einer Strombelastung von 4 A und bei 50 -55° C fortgesetzt.

In den Kathodenraum der Zelle wurde Wasser mit einer Geschwindigkeit von 29,3 ml/h und in den Anodenraum Sulfatlösung, die als Spinnbad bei der Herstellung von Folien aus regenerierter Zellulose eingesetzt war und die, wie in Beispiel 1 beschrieben, über Aktivkohle filtriert war, mit einer Geschwindigkeit von 275,8 ml/h gepumpt. Diese Sulfatlösung hatte folgende Zusammensetzung: 53,9 g/l $H_2SO_4$ und 151 g/l $Na_2SO_4$ sowie 16 mg/l $Ca^{++}$ und 18 mg/l $Mg^{++}$.

Für die Mittelkammer wurde die Natriumsulfatlösung verwendet, die im Beispiel 3 als Ablauf aus der Mittelkammer angefallen war. Diese Lösung wurde zunächst zur Abtrennung von $Ca^{++}$ und $Mg^{++}$ wie folgt behandelt:

Es wurdem Natriumhydroxidlösung (Katholyt-Lauge aus Beispiel 3) bis zu einem pH-Wert von 9 - 9,5 und 0,1 g/l $Na_3PO_4$ zugesetzt. Der sich bildende Niederschlag wurde abfiltriert. Anschließend wurde die Lösung über eine Säule mit (R)Lewatit TP 207, wie in Beispiel 3 beschrieben, oder Lewatit TP 120 geschickt. Danach wurden Ca- und Mg-Gehalte von jeweils 1 mg/l und ein NaOH-Gehalt von 1,5 g/l bestimmt. Die so gereinigte Lösung wurde mit einer Geschwindigkeit von 89,8 ml/h in die Mittelkammer der Zelle gepumpt.

Nach einer Laufzeit von rund 1103 h und einem Stromverbrauch von 4411,7 Ah waren insgesamt 32,34 1 $H_2O$ in den Kathodenraum, 304,23 1 Sulfatlösung in den Anodenraum und 99,01 1 gereinigte Natriumsulfatlösung in die Mittelkammer eingespeist. Aus der Zelle wurden abgeführt: 42,55 1 Katholyt mit 109,5 g/l NaOH, 289,16 1 Anolyt mit 73,8 g/l $H_2SO_4$ und 136 g/l $Na_2SO_4$, sowie 95,07 1 Natriumsulfatlösung aus der Mittelkammer mit 8,0 g/l $H_2SO_4$.

Hieraus errechnet sich eine Mengenausbeute von 4659,2 g NaOH im Katholyt und von 4942 g $H_2SO_4$ im Anolyt, sowie, bezogen auf die umgesetzte Strommenge von 4411,7 Ah, eine Stromausbeute von 70,8 % für NaOH und von 61,2 % für $H_2SO_4$.

In der Mittelkammer waren 760,6 g $H_2SO_4$ entstanden. Unter Berücksichtigung der zur Neutralisation der 1,5 g/l NaOH, die in der Lösung von der Elektrolyse enthalten waren, erforderlichen Schwefelsäure, ergibt sich für die Mittelkammer eine Gesamtausbeute von 942,7 g $H_2SO_4$ bzw. eine Stromausbeute von 11,7 %.

In der aus der Mittelkammer abfließenden Lösung wurden nach verschiedenen Zeitabständen Ca- und Mg-Bestimmungen durchgeführt. Die Werte lagen über den gesamten Zeitraum im Bereich von 2 mg/l bis höchstens 4 mg/l. Aus den Einzelwerten wurde, bezogen auf eine Strommenge von 1 Ah, im Mittel eine Überführung von 0,075 mg Ca und von 0,067 mg Mg aus dem Anolyt in die Mittelkammer berechnet.

Die Zellenspannung lag während der gesamten Versuchsdauer zwischen 4,1 und 4,2 Volt. Die gleichen Membranen waren damit über eine Gesamtlaufzeit von rund 2200 h (Beispiel 3 + 4) eingesetzt. Es war kein Anstieg der Zellenspannung festzustellen.

**Patentansprüche**

1. Verfahren zur Erhöhung der Schwefelsäure-Konzentration von Lösungen, die Alkalisulfat, Schwefelsäure und Erdalkalimetall-Ionen enthalten, durch Elektrolyse in einer Zelle mit einem Anodenraum und einem Kathodenraum, die jeweils durch eine Kationenaustauscher-Membran begrenzt werden, wobei die aufzuarbeitenden Lösungen in den Anodenraum der Zelle eingeführt werden, dadurch gekennzeichnet, daß zwischen Kathodenraum und Anodenraum zwei Kationenaustauscher-Membranen vorhanden sind, die eine Mittelkammer begrenzen, diese Mittelkammer mit einer wäßrigen Alkaliionen enthaltenden Lösung gefüllt ist und man während der Elektrolyse die Konzentration der Lösung in der Mittelkammer an Erdalkalimetall-Ionen unter 5 mg/l hält.

2. Verfahren nach Anspruch 1, dadurch gekennzeichnet, daß Lösungen elektrolysiert werden, die Natriumsulfat, Schwefelsäure sowie Kalzium- und/oder Magnesiumionen enthalten.

3. Verfahren nach Anspruch 1, dadurch gekennzeichnet, daß man die Mittelkammer der Zelle von einer Lösung durchströmen läßt, die

Alkalisulfat enthält.

4. Verfahren nach Anspruch 3, dadurch gekennzeichnet, daß die Alkalisulfat-Konzentration der Lösung, die durch die Mittelkammer strömt, das 0,5 bis 2-fache der Alkalisulfat-Konzentration der Lösung im Anodenraum der Zelle beträgt.

5. Verfahren nach Anspruch 3, dadurch gekennzeichnet, daß man aus der Lösung, die die Mittelkammer der Elektrolysezelle verläßt, nach Einstellen eines pH-Wertes von mindestens 7 durch Fällen und/oder Ionenaustausch die Erdalkaliionen abtrennt und die so behandelte Lösung wieder in die Mittelkammer zurückführt.

6. Verfahren nach Anspruch 2, dadurch gekennzeichnet, daß Lösungen elektrolysiert werden, die als Spinnbad, als Fällbad oder als Spülbad bei der Produktion von Fäden oder von Folien aus regenerierter Zellulose verwendet wurden.

7. Verfahren zur Herstellung regenerierter Zellulose, wobei man eine Natriumionen und geringe Mengen an Erdalkaliionen enthaltende alkalische Zellulose-Lösung in Kontakt mit einer Schwefelsäure-Lösung bringt und dadurch die Zellulose ausfällt, man die regenerierte Zellulose durch mindestens ein weiteres Säurebad schickt, um anhaftende Natriumionen vollständig zu entfernen, man die regenerierte Zellulose mit Wasser wäscht, man die Lösung des Fällbades und gegebenenfalls der weiteren Säurebäder in die Anodenkammer einer Elektrolysezelle einspeist, die durch eine Kationenaustauscher-Membran abgegrenzt ist, man die Säurelösung in der Zelle elektrolysiert und dabei ihre Konzentration an freier Schwefelsäure erhöht und ihren Gehalt an Natriumionen verringert, dadurch gekennzeichnet, daß die Elektrolyse in einer 3-Kammer-Zelle durchgeführt wird, die Kathodenkammer ebenfalls durch eine Kationenaustauscher-Membran abgegrenzt ist und man in der Mittelkammer der Zelle den Gehalt an Erdalkalimetall-Ionen unter 5 mg/l hält.

8. Verfahren nach Anspruch 7, dadurch gekennzeichnet, daß man die in der Anodenkammer erzeugte Lösung, gegebenenfalls nach teilweisem Eindampfen, erneut als Schwefelsäure-Lösung zum Ausfällen regenerierter Zellulose verwendet.

## Claims

1. A process for increasing the sulfuric acid concentration of solutions containing an alkali metal sulfate, sulfuric acid and alkaline earth metal ions, by electrolysis in a cell having an anode compartment and a cathode compartment each of which is bounded by a cation exchange membrane, the solutions to be worked up being introduced into the anode compartment of the cell, which comprises two cation exchange membranes which demarcate a center chamber being present between the cathode compartment and the anode compartment, this center chamber being filled with a solution containing aqueous alkali metal ions, and the concentration of alkaline earth metal ions in the center chamber being kept below 5 mg/l during the electrolysis.

2. The process as claimed in claim 1, wherein solutions containing sodium sulfate, sulfuric acid and also calcium and/or magnesium ions are electrolyzed.

3. The process as claimed in claim 1, wherein a solution containing an alkali metal sulfate is arranged to flow through the center chamber of the cell.

4. The process as claimed in claim 3, wherein the alkali metal sulfate concentration of the solution flowing through the center chamber is 0.5 to twice the concentration of alkali metal sulfate in the solution in the anode compartment of the cell.

5. The process as claimed in claim 3, wherein the alkaline earth metal ions are removed from the solution leaving the center chamber of the electrolysis cell by precipitation and/or ion exchange, after adjusting the pH to a value of at least 7, and the solution thus treated is recycled to the center chamber.

6. The process as claimed in claim 2, wherein solutions which have been used as the spinning bath, the precipitation bath or the washing bath in the production of filaments or films from regenerated cellulose, are electrolyzed.

7. A process for the production of regenerated cellulose, in which an alkaline cellulose solution containing sodium ions and small amounts of alkaline earth metal ions is brought into contact with a sulfuric acid solution and the cellulose is thereby precipitated, the regenerated cellulose is passed through at least one further acid bath in order to remove completely sodium ions adhering to it, the regenerated cellulose is washed with water, the solution of the precipitation bath and, if appropriate, of the further acid baths is fed into the anode chamber of an electrolysis cell which is bounded by a cation exchange membrane, the acid solution is electrolyzed in the cell and, in the course thereof, its concentration of free sulfuric acid is increased and its content of sodium ions is reduced, which comprises carrying out the electrolysis in a 3-chamber cell, the cathode chamber also being bounded by a cation exchange membrane, and the content of alkaline earth metal ions in the center chamber of the cell being kept below 5 mg/l.

8. The process as claimed in claim 7, wherein the solution produced in the anode chamber, if appropriate after partial evaporation, is used again as the sulfuric acid solution for the precipitation of regenerated cellulose.

**Revendications**

1. Procédé pour augmenter la concentration en acide sulfurique de solutions contenant un sulfate de métal alcalin, de l'acide sulfurique et des ions de métaux alcalino-terraux, par électrolyse dans une cellule comportant un compartiment d'anode et un compartiment de cathode, délimités chacun par une membrane échangeuse de cations, les solutions à traiter étant introduites dans le compartiment d'anode de la cellule, procédé caractérisé en ce que deux membranes échangeuses de cations, qui délimitent un compartiment central, sont aménagées entre le compartiment de cathode et le compartiment d'anode, que ce compartiment central est rempli d'une solution aqueuse contenant des ions de métal alcalin et en ce qu'on maintient la concentration en ions de métaux alcalino-terreux de la solution dans le compartiment central au-dessous-de 5 mg/l.

2. Procédé selon la revendication 1, caractérisé en ce que l'on électrolyse des solutions contenant du sulfate de sodium, de l'acide sulfurique ainsi que des ions calcium et/ou magnésium.

3. Procédé selon la revendication 1, caractérisé en ce que l'on fait passer une solution contenant du sulfate de métal alcalin par le compartiment central de la cellule.

4. Procédé selon la revendication 3, caractérisé en ce que la concentration en sulfate de métal alcalin de la solution passant par le compartiment central est 0,5 à 2 fois la concentration en sulfate de métal alcalin de la solution dans le compartiment d'anode de la cellule.

5. Procédé selon la revendication 3, caractérisé en ce que l'on separe les ions de métaux alcalino-terreux de la solution sortant du compartiment central de la cellule d'électrolyse, après ajustage d'un pH d'au moins 7, par précipitation et/ou échanqe d'ions et en ce que l'on recycle la solution ainsi traitée au compartiment central.

6. Procédé selon la revendication 2, caractérisé en ce que l'on électrolyse des solutions, qui ont été utilisées en tant que bains de filage, bains de précipitation ou bains de rinçage dans la production de fils ou de pellicules constitués de cellulose régénérée.

7. Procédé pour produire de la cellulose régénérée, dans lequel on met en contact une solution alcaline de cellulose contenant des ions sodium et de petites quantités d'ions de métal alcalino-terreux avec une solution d'acide sulfurique et on précipite ainsi la cellulose, on fait passer la cellulose régénérée par au moins un second bain acide afin d'éliminer complètement des ions sodium adhérant à la cellulose, on lave la cellulose régénérée avec de l'eau, on amène la solution du bain de précipitdtion et, le cas échéant, des autres bains acides, au compartiment d'anode d'une cellule d'électrolyse délimité par une membrane échangeuse de cations, on électrolyse la solution d'acide dans la cellule, tout en augmentant sa concentration en acide sulfurique libre et en réduisant sa teneur en ions sodium, procédé caractérisé en ce qu'on effectue l'électrolyse dans une cellule à trois compartiments, que le compartiment de cathode est également délimité par une membrane échangeuse de cations et qu'on maintient la teneur en ions de métaux alcalino-terreux dans le compartiment central de la cellule au-dessous de 5 mg/l.

8. Procédé selon la revendication 7, caractérisé en ce qu'on utilise de nouveau la solution produite dans le compartiment d'anode, le cas échéant, après concentration par évaporation partielle, comme solution d'acide sulfurique, pour la précipitation de la cellulose régénérée.